# DEMANDE DE BREVET EUROPEEN

(11) **EP 4 692 916 A1**
(43) Date de publication de la demande: **11.02.2026**
(21) Numéro de dépôt: 24193706.9
(22) Date de dépôt: 08.08.2024
(51) Int. Cl.: G02F 1/1333, G02F 1/1335, G04G 9/00

(54) **PROCÉDÉ DE FABRICATION D'UN DISPOSITF D'AFFICHAGE À CRISTAUX LIQUIDES POUR UNE PIÈCE D'HORLOGERIE**

(71) Demandeur: The Swatch Group Research and Development Ltd, 2074 Marin (CH)
(72) Inventeur: SAGARDOYBURU, Michel, 2000 Neuchâtel (CH)
(74) Mandataire: ICB SA

(57) **Abrégé**

Le procédé de fabrication d'une cellule à cristaux liquides (cellule LCD), formant un dispositif d'affichage horloger, comprend la formation d'un ensemble de base (32), comprenant les deux plaques transparentes sur lesquelles sont structurées les électrodes (28, 29), et d'un ensemble de recouvrement (66) comprenant une partie utile (50) formée par un polariseur et une couche de colle pour la fixation du polariseur sur une des plaques transparentes. Pour effectuer précisément le dépôt du polariseur, des cibles (30a, 30c) sont réalisées dans l'ensemble de base et des marques d'alignement correspondantes (48a, 48c) sont découpées dans au moins une partie de travail de l'ensemble de recouvrement, de manière que les cibles puissent être vue au travers des marques d'alignement lors du placement de l'ensemble de recouvrement sur l'ensemble de base lors du collage du polariseur sur cet ensemble de base. De préférence, ladite au moins une partie de travail est enlevée de la cellule LCD suite au collage du polariseur sur la plaque transparente au moins partiellement au-dessus des électrodes. Dans le cas contraire, les cibles et ladite au moins une partie de travail sont avantageusement agencées à l'extérieur d'une zone utile de la cellule LCD.

## Description

### Domaine technique de l'invention

La présente invention concerne le domaine de la fabrication des dispositifs d'affichage à cristaux liquides (aussi nommés 'dispositifs LCD') pour des pièces d'horlogerie, en particulier de cellules à cristaux liquides (aussi nommées 'cellules LCD') définissant une zone d'affichage seulement sur une partie de la zone visible de la cellule LCD une fois le dispositif LCD agencé dans une boîte de montre. Une telle cellule LCD est notamment prévue pour obtenir un affichage électronique au-dessus d'un cadran avec une zone d'affichage recouvrant partiellement la partie du cadran qui est visible pour un utilisateur, en particulier un affichage électronique situé au-dessus d'un dispositif d'affichage analogique de la montre et présentant une zone transparente (zone de la cellule LCD sans polarisateur) autour de la zone d'affichage (zone de la cellule LCD avec polarisateurs et électrodes), de sorte à obtenir un affichage électronique du type flottant.

### Arrière-plan technologique

On connaît du document EP 3 650 958 une montre munie d'un dispositif électrooptique présentant un affichage électronique `flottant', une zone transparente au travers de la cellule électrooptique demeurant à la périphérie d'une zone d'affichage de cette cellule électrooptique (cellule LCD). Il est prévu dans ce document que la zone d'affichage, définissant un affichage électronique supérieur, soit opaque, en contraste avec la zone transparente périphérique (zone sans polarisateur), de sorte qu'un cadran et un affichage analogique inférieur, situés sous la cellule LCD, demeurent constamment invisibles dans la zone d'affichage et visibles dans la zone transparente périphérique.

En particulier, la zone d'affichage est définie par un polariseur arrière et un polariseur avant qui sont superposés et sont prévus seulement sur une partie de la région de la cellule LCD visible dans la montre pour un utilisateur. En d'autres termes, les polariseurs s'étendent sur une surface de la cellule LCD qui est inférieure à la surface utile de cette cellule LCD (surface visible de la cellule LCD une fois incorporée dans la montre), la cellule LCD s'étendant, dans un plan général, sur une surface comprenant l'entier d'une fenêtre de cette montre prévue pour pouvoir voir ledit affichage analogique et ledit affichage électronique, cette fenêtre définissant une zone utile / zone visible de la cellule à cristaux liquides.

Un problème majeur d'un affichage électronique 'flottant' tel que décrit ci-avant vient du fait que les polariseurs présentent des dimensions inférieures à celles de ladite fenêtre et qu'ainsi le moindre décalage entre le polariseur avant et le polariseur arrière est bien visible en bordure de la zone d'affichage de la cellule LCD. En effet, un petit décalage entre deux polariseurs circulaires superposés engendre un croissant argenté, plus ou moins fin selon le décalage, qui se voit bien par un utilisateur. Ceci donne une impression d'une fabrication bas de gamme, comme le serait une impression en couleur mal réalisée, par exemple avec une succession d'impressions de couleurs de base qui seraient décalées, c'est-à-dire non alignées précisément.

Il y a donc un besoin pour un procédé de fabrication de cellules LCD, ayant une zone d'affichage 'flottante', qui permette un alignement précis des polariseurs avant et arrière, et également un positionnement précis de ces deux polariseurs par rapport aux électrodes qui définissent les informations pouvant être affichées. Plus généralement, un procédé permettant de positionner, dans la cellule à cristaux liquides, un polariseur qui recouvre seulement partiellement la zone utile / zone visible de cette cellule à cristaux liquides est souhaité.

### Résumé de l'invention

Pour répondre au problème majeur et satisfaire le besoin qui sont identifiés dans l'arrière-plan technologique, l'invention concerne en général un procédé de fabrication d'un dispositif d'affichage à cristaux liquides tel que défini à la revendication 1. Un mode de mise en oeuvre principal du procédé de fabrication est défini par les revendications 1 et 7. Un dispositif d'affichage LCD pour lequel le mode de mise en oeuvre principal est très avantageux est défini à la revendication dépendante 8. Des variantes avantageuses sont définies aux revendications 9 et 10.

Grâce aux caractéristiques du procédé de fabrication selon l'invention, il est possible de positionner très précisément un polariseur sur une plaque transparente de la cellule à cristaux liquides. En particulier, il est possible de positionner précisément un polariseur, recouvrant seulement partiellement la zone utile / zone visible de cette cellule à cristaux liquides, dans cette zone utile / zone visible et relativement aux électrodes. Comme le procédé de fabrication selon l'invention peut être réalisé pour un polariseur avant et répété pour un polariseur arrière, il est ainsi possible d'obtenir un alignement parfait de ces deux polariseurs notamment dans le cas d'un affichage du type `flottant'.

### Brève description des figures

L'invention sera décrite ci-après de manière détaillée à l'aide des dessins annexés, donnés à titre d'exemples nullement limitatifs, dans lesquels :
- la Figure 1 est une vue en plan d'une plaque transparente, sur laquelle sont structurées des électrodes dans une zone d'affichage et à sa périphérie, cette plaque transparente étant destinée à former une cellule à cristaux liquides (aussi nommée 'cellule LCD') intervenant dans un mode de mise en oeuvre du procédé de fabrication selon l'invention ;
- la Figure 2 est une vue en coupe au travers d'un ensemble de base de la cellule LCD en fabrication ;
- la Figure 3 est une vue en coupe, selon la ligne III-III de la Figure 5, d'un ensemble initial comprenant un film polariseur dont une partie est destinée à constituer un polariseur recouvrant seulement partiellement une zone utile / zone visible de la cellule LCD, cet ensemble initial subissant une découpe spécifique ;
- la Figure 4 montre schématiquement l'enlèvement d'une partie résiduelle de l'ensemble initial, de manière à conserver les parties du film polariseur utiles à la suite du procédé de fabrication ;
- la Figure 5 est une vue de dessus d'un ensemble intermédiaire obtenu à partir de l'ensemble initial suite à l'enlèvement de la partie résiduelle ;
- la Figure 6 montre en coupe, selon la ligne VI-VI de la Figure 5, un transfert de parties de l'ensemble intermédiaire, situées sur un support formant cet ensemble intermédiaire, sur un support additionnel pour former un ensemble final prêt au dépôt du polariseur sur la plaque transparente de l'ensemble de base ;
- la Figure 7 montre le positionnement précis de l'ensemble final relativement à l'ensemble de base avant le dépôt par collage du polariseur sur la plaque transparente supérieure de cet ensemble de base ;
- la Figure 8 est une coupe en plan selon la ligne VIII -VIII de la Figure 7 ;
- la Figure 9 est une vue en coupe de la cellule LCD partiellement formée avec le polariseur avant collé sur l'ensemble de base ; et
- la Figure 10 est une vue en coupe de la cellule LCD entièrement formée avec un polariseur arrière déposé sur la plaque transparente inférieure de l'ensemble de base de la même manière que le polariseur avant.

### Description détaillée de l'invention

Un mode de mise en oeuvre du procédé de fabrication d'une cellule à cristaux liquides / cellule LCD selon l'invention est décrit ci-après en détails.

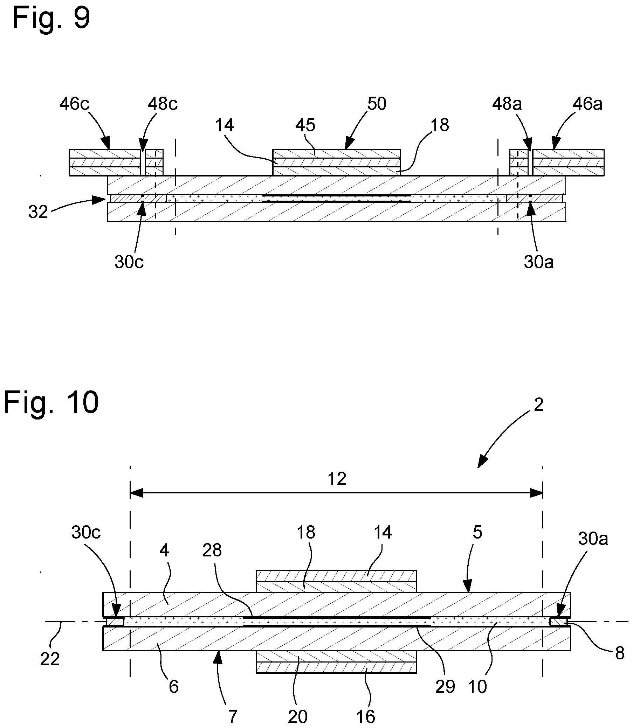

Le dispositif d'affichage à cristaux liquides, suite à ladite mise en oeuvre du procédé de fabrication, comprend une cellule à cristaux liquides 2 (Figure 10), laquelle est formée d'une première plaque 4 et d'une deuxième plaque 6, qui sont transparentes, et d'un cordon de colle 8 reliant les première et deuxième plaques et définissant avec celles-ci un logement clos contenant des cristaux liquides 10, la cellule à cristaux liquides définissant à l'intérieur du cordon de colle une zone utile 12, qui est destinée à définir la zone visible de cette cellule dans une pièce d'horlogerie auquel le dispositif d'affichage est destiné, et comprenant dans cette zone utile un premier polariseur 14 et un deuxième polariseur 16 qui sont déposés respectivement sur la surface extérieure 5 de la première plaque 4 et sur la surface extérieure 7 de la deuxième plaque 6 au moyen d'une première couche de colle 18 et d'une deuxième couche de colle 20 qui assurent la fixation et le maintien en place des premier et deuxième polariseurs. Dans le domaine des cellules LCD, on nomme également 'un substrat' chacune des deux plaques transparentes sur lesquelles sont imprimés ou structurés d'un côté des électrodes et supportant de l'autre côté un polariseur. Dans la variante avantageuse décrite, le premier polariseur et le deuxième polariseur sont agencés précisément l'un en face de l'autre, et les premier et deuxième polariseurs recouvrent seulement partiellement la zone utile 12. Dans cette variante avantageuse, l'affichage LCD est prévu 'flottant' dans une zone d'affichage 24 prévue au centre de la cellule LCD 2, cette zone d'affichage étant définie par les premier et deuxième polariseurs.

Des électrodes sont réalisées sur la surface intérieure de la première plaque, respectivement de la deuxième plaque notamment dans une zone 26 de la zone utile 12, cette zone 26 incorporant la zone d'affichage 24. Les deux ensembles d'électrodes 28 et 29, représentés en coupe de manière continue vu les dimensions du dessin, sont situés l'un en face de l'autre dans le logement clos contenant les cristaux liquides 10. De manière générale, dans le cadre de l'invention, le premier polariseur et le deuxième polariseur sont agencés au moins en partie l'un en face de l'autre de manière qu'au moins le premier polariseur recouvre seulement partiellement la zone utile 12. Ainsi, dans un mode de mise en oeuvre général, le deuxième polariseur peut recouvrir entièrement la zone utile, de sorte qu'il n'est pas nécessaire d'avoir un positionnement précis de ce deuxième polariseur relativement au premier polariseur et/ou relativement aux électrodes de la cellule LCD. On notera que la cellule LCD peut avoir d'autres polariseurs agencés sur la surface extérieure de la première plaque 4, ces autres polariseurs définissant d'autres zones d'affichage ou des zones décoratives découlant des polariseurs sélectionnés. De préférence, ces autres polariseurs sont aussi déposés par le procédé de fabrication selon l'invention. On notera que le premier polariseur 14 et le deuxième polariseur 16 peuvent être respectivement un polariseur avant et un polariseur arrière de la cellule LCD, ou inversement.

Le procédé de fabrication selon l'invention concerne le dépôt d'un polariseur recouvrant seulement partiellement la zone utile 12. Ci-après, dans le cadre de la description de la variante avantageuse du procédé de fabrication relative à un affichage `flottant', on décrira en détails le dépôt du premier polariseur 14 et on notera que le dépôt du deuxième polariseur 16 est semblable au dépôt du premier polariseur. On ne répétera donc pas en détails les étapes intervenant dans le dépôt du deuxième polariseur.

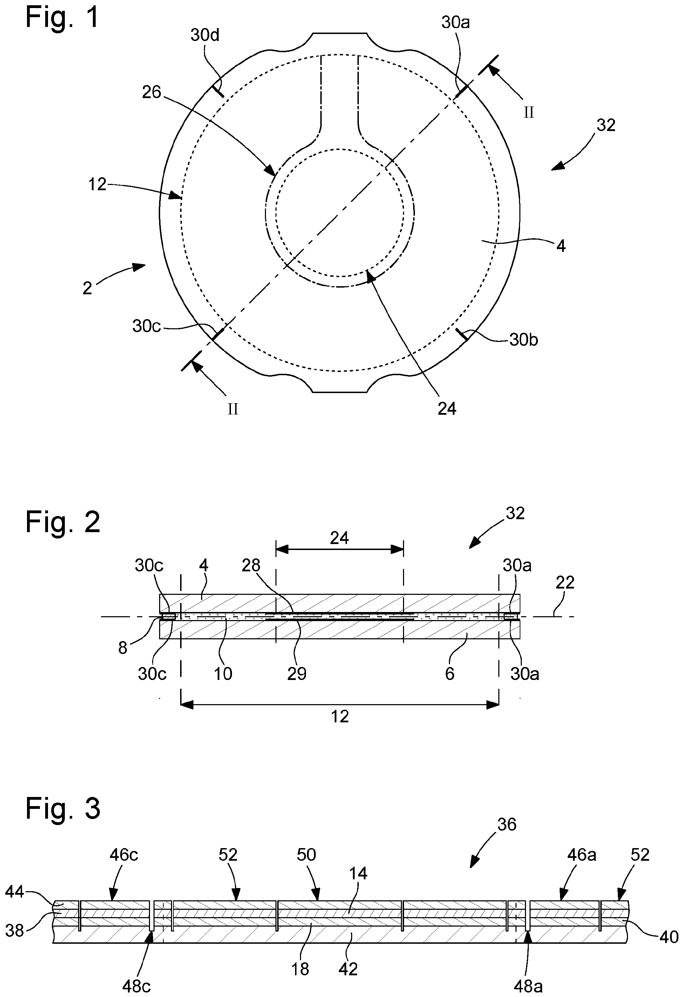

Le procédé de fabrication comprend les étapes suivantes :
- Étape A) Réalisation de quatre cibles 30a, 30b, 30c et 30d sur la première plaque transparente 4, prévue pour le dépôt ultérieur du premier polariseur 14 (voir Figure 1), et sur la deuxième plaque transparente 6, prévues pour le dépôt ultérieur du deuxième polariseur 16. En particulier, les quatre cibles sont définies par quatre traits radiaux relativement épais imprimés sur la surface intérieur de la plaque transparente concernée et décalés de 90°. De manière générale, il est prévu de réaliser dans cette étape A) au moins deux cibles. Une condition spécifique quant auxdites au moins deux cibles est donnée à l'étape B) qui suit.
- Étape B) Formation d'un ensemble de base 32 (voir Figure 2) comprenant la première plaque 4, la deuxième plaque 6, le cordon de colle 8 définissant ledit logement clos et des cristaux liquides 10 remplissant ce logement clos, la réalisation de cibles 30a à 30d, la formation de cet ensemble de base étant effectuée de manière qu'au moins deux des cibles, distantes en projection orthogonale dans un plan général 22 de l'ensemble de base, soient visibles, au moins sous une lumière donnée, du côté de la surface extérieure 5 de la première plaque transparente 4.
- Étape C) Formation d'un ensemble initial 36 (voir Figure 3) comprenant un film polariseur 38, un film adhésif 40 déposé sur une face intérieure du film polariseur, et un support 42 qui supporte le film polariseur et le film adhésif, une partie du film polariseur étant destinée à constituer le premier polariseur 14 et étant recouverte par une première partie 18 du film adhésif. Cette première partie du film adhésif est aussi nommée 'couche de colle' dans la cellule LCD 2 obtenue par le procédé de fabrication. Dans la variante particulière représentée aux figures, l'ensemble initial 36 comprend avantageusement en outre un film de protection 44 prévu pour protéger le polariseur jusqu'au montage de la cellule LCD dans une boîte de montre.
- Étape D) Découpe borgne de l'ensemble initial 36 (voir Figure 3), depuis le côté opposé au support 42, de manière à traverser le film polariseur 38 et le film adhésif 40, en définissant le pourtour d'une partie utile 50, située sur le support et comprenant le premier polariseur 14 et ladite première partie 18 du film adhésif, et de quatre parties de travail 46a, 46b, 46c et 46d, mais sans traverser le support 42. On notera que dans une variante générale, il est prévu au moins une partie de travail. On effectue également une découpe de quatre marques d'alignement 48a, 48b, 48c et 48d respectivement dans les quatre parties de travail. Cette dernière découpe peut être borgne, c'est-à-dire qu'elle ne traverse pas le support 42, ou traversante. Les quatre marques d'alignement sont découpées de manière qu'elles présentent entre elles des positions relatives qui sont identiques aux positions relatives des quatre cibles 46a à 46d imprimées sur la première plaque 4 de l'ensemble de base 32. On notera que dans le cas de la variante particulière avec le film de protection 44, ce dernier est également découpé dans toutes les découpes prévues. Ainsi, la partie utile 50 comprend une partie supérieure 45 qui est découpée dans le film de protection 44. Plus généralement, tous les films situés au-dessus du support 42 sont découpés lors de cette étape de découpe. Dans la variante représentée, les parties de travail comprennent une partie du film adhésif 40, une partie du film polariseur 38 et une partie du film de protection 44. On remarquera que les parties de travail présentent avantageusement des parties des mêmes films formant la partie utile 50, en particulier des parties respectives du film polariseur.

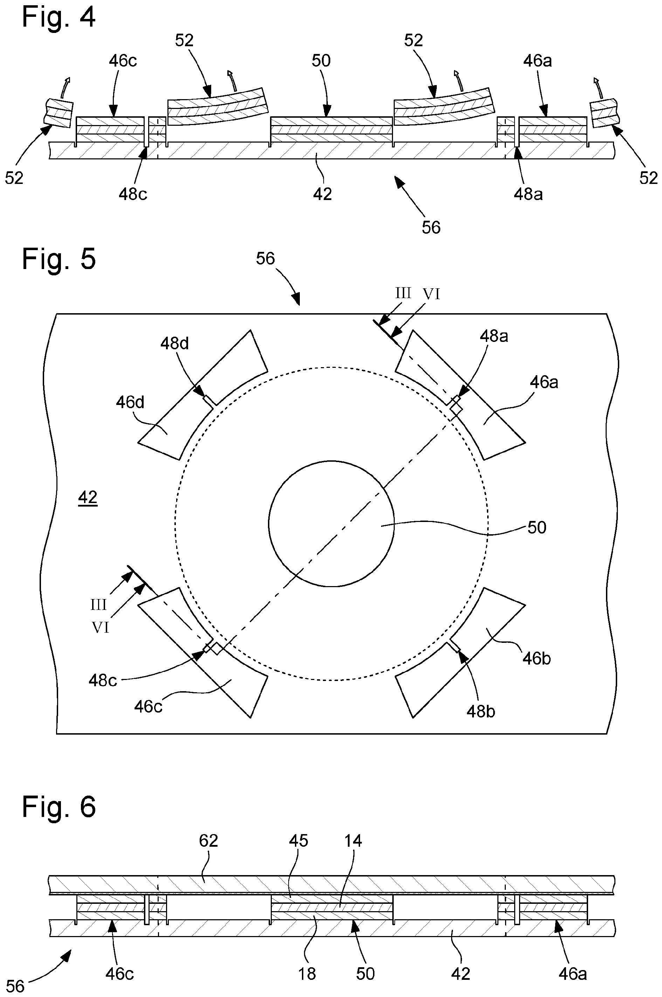

Dans la variante générale, il est prévu d'usiner au moins deux marques d'alignement au moins au travers de ladite au moins une partie de travail, de manière que ces au moins deux marques d'alignement présentent entre elles des positions relatives qui sont identiques aux positions relatives desdites au moins deux cibles. Les diverses découpes peuvent être réalisées par un faisceau laser, par une lame ou par tout autre moyen de découpe approprié. Le support 42 est agencé de manière à pouvoir maintenir un positionnement relatif initial entre la partie utile 50 et les parties de travail 46a à 46d dès cette étape de découpe.
- Étape E) Enlèvement dans l'ensemble initial 36, après l'étape de découpe D), d'une partie résiduelle 52, située sur le support 42, qui est complémentaire à ladite partie utile 50 et aux parties de travail (plus généralement à ladite au moins une partie de travail), tout en laissant en place sur le support ladite partie utile et ces parties de travail (plus généralement ladite au moins une partie de travail), de manière à obtenir, dans le cas où le support 42 est situé du côté opposé au film polariseur 38 relativement au film adhésif 40 (cas correspondant au mode de mise en oeuvre décrit en référence aux figures), un ensemble intermédiaire 56 (voir Figures 4 et 5) ou, dans l'autre cas, un premier ensemble final.

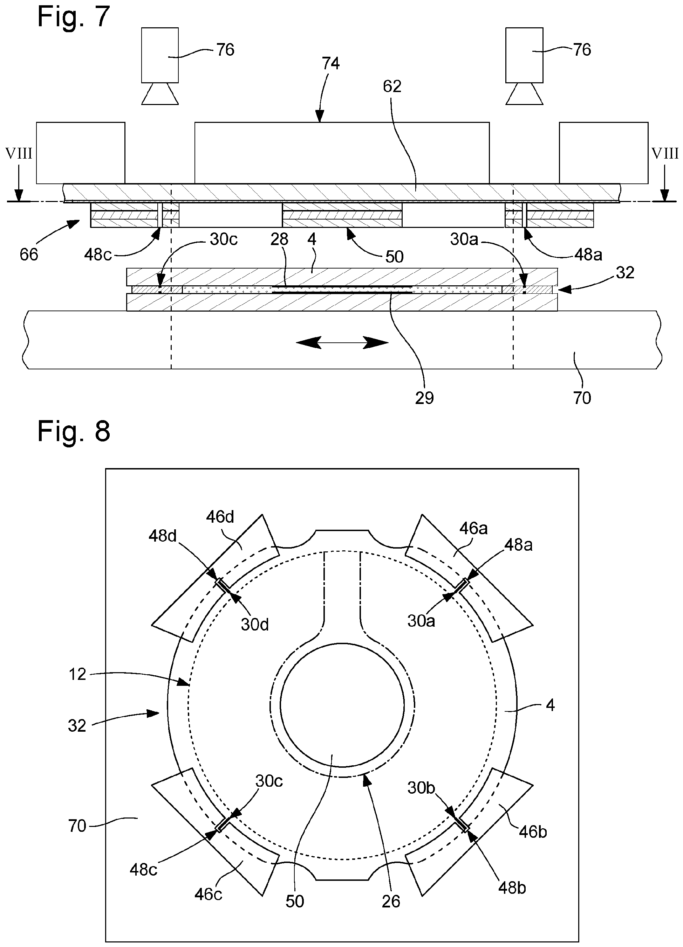

Lorsque le support est situé, dans l'ensemble initial, du côté opposé au film adhésif relativement au film polariseur et que l'étape E) fournit le premier ensemble final incorporant le support, ce support est prévu transparent, au moins sous ladite lumière donnée, ou ouvert dans au moins deux zones superposées respectivement auxdites aux moins deux marques d'alignement. Cette situation concerne un autre mode de mise en oeuvre du procédé de fabrication d'un dispositif d'affichage LCD selon l'invention, lequel est traité dans cette description seulement lorsqu'il s'écarte du mode de mise en oeuvre qui est décrit en référence aux figures.
- Étape F) Dans le cas où l'étape E) fournit l'ensemble intermédiaire 56 (comme dans le mode de mise en oeuvre représenté), apport d'un support additionnel 62, du côté du premier polariseur 14 qui est opposé à la première partie 18 du film adhésif ; et transfert du premier polariseur avec ladite première partie du film adhésif et de ladite au moins une partie de travail, en particulier des quatre parties de travail de la variante représentée, depuis le support 42 sur le support additionnel 62 pour former un deuxième ensemble final 66. Le support additionnel 62 est transparent (variante des Figures 6 et 7), au moins sous ladite lumière donnée, ou ouvert dans des zones superposées respectivement auxdites marques d'alignement 48a à 48d. Ensuite, le support additionnel 62 est agencé pour pouvoir maintenir ledit positionnement relatif initial entre le premier polariseur 14 et les parties de travail 46a à 46d.

Les étapes précédentes sont suivies par les étapes successives suivantes :
- Étape G) Apport, selon le cas, dudit premier ensemble final ou du deuxième ensemble final 66 (mode de mise en oeuvre représenté) au-dessus de la première plaque 4 de l'ensemble de base 32, au moyen d'un outil 74 qui est transparent, au moins sous ladite lumière donnée, ou ouvert (variante de la Figure 7) dans des zones superposées aux marques d'alignement 48a à 48d avec le support, respectivement le support additionnel 62 (mode de mise en oeuvre représenté) situé du côté opposé à la première plaque relativement aux parties de travail (plus généralement, à ladite au moins partie de travail) et la première partie 18 du film adhésif 40 située directement en face de la première plaque (voir Figure 7) ; et positionnement précis, selon le cas, du premier ensemble final ou deuxième ensemble final 66 relativement à la première plaque 4 par un alignement précis des cibles 30a à 30d (plus généralement, desdites au moins deux cibles) avec respectivement lesdites marques d'alignement 48a à 48d (plus généralement, lesdites au moins deux marques d'alignement), au moyen d'une table 70 mobile dans un plan parallèle au plan général 22 de l'ensemble de base 32 et d'un dispositif optique 76 agencé pour permettre de voir, au moins sous ladite lumière donnée (en particulier une lumière bleue collimatée) et selon une direction orthogonale au plan général, lesdites cibles au travers desdites marques d'alignement, lesquelles sont agencées de manière que les cibles peuvent être précisément alignées, selon ladite direction orthogonale, respectivement avec ces marques d'alignement (voir Figure 8).
- Étape H) Déplacement, selon la direction orthogonale audit plan général, du premier ensemble final, respectivement du deuxième ensemble final 66 vers la première plaque 4 de l'ensemble de base ; collage du premier polariseur 14 sur cette première plaque au moyen de ladite première partie 18 du film adhésif ; et retrait du support, respectivement du support additionnel 62. Dans la variante avantageuse du mode de mise en oeuvre décrit, les parties de travail comprennent chacune une partie du film adhésif et sont également collées sur la première plaque 4 simultanément au premier polariseur. Dans une première variante, les parties de travail sont prévues hors de la zone utile 12 et peuvent être laissées sur la première plaque 4 dans la cellule LCD.

Dans une deuxième variante, les parties de travail sont enlevées suite à l'étape H), notamment lorsqu'elles dépassent le contour extérieur de la plaque transparente sur laquelle elles sont collées ou qu'elles sont situées au moins en partie dans la zone utile 12.

Le procédé de fabrication est répété pour le dépôt du deuxième polariseur 16, lequel recouvre seulement partiellement la zone utile 12 et, dans la variante avantageuse représentée aux figures, est prévu de mêmes dimensions que le premier polariseur 14 et est entièrement superposé à ce premier polariseur. Ainsi, l'ensemble initial 36 est un premier ensemble initial et le procédé de fabrication comprend en outre une étape de formation d'un deuxième ensemble initial, semblable au premier ensemble initial, comprenant un deuxième film polariseur, un deuxième film adhésif déposé sur une face intérieure du deuxième film polariseur, et un deuxième support supportant le deuxième film polariseur et le deuxième film adhésif, une partie du deuxième film polariseur étant destinée à constituer le deuxième polariseur 16 et étant recouverte par une partie 20 du deuxième film adhésif. De manière générale, ladite réalisation des cibles et ladite formation dudit ensemble de base 32 sont effectuées de manière qu'au moins deux des cibles, distantes en projection orthogonale dans ledit plan général 22, soient visibles, au moins sous la lumière donnée, du côté de la surface extérieure de la deuxième plaque 6. Dans la variante particulière représentée aux figures, quatre cibles 30a à 30d sont imprimées sur la face intérieure de la deuxième plaque transparente 6. Elles peuvent être alignées, selon ladite direction orthogonale, avec les quatre cibles imprimées sur la première plaque transparente 4. Les étapes D) à H) sont répétées avec le deuxième ensemble initial. On obtient finalement la cellule à cristaux liquides 2 représentée à la Figure 10.

Selon une variante particulière, le premier polariseur présente, au moins dans une partie de la zone utile 12, un premier contour qui est identique au deuxième contour du deuxième polariseur, le premier contour et le deuxième contour étant précisément alignés, selon la direction orthogonale au plan général 22, dans la cellule à cristaux liquides 2.

Selon une autre variante particulière, le premier polariseur et le deuxième polariseur sont entièrement situés à l'intérieur de la zone utile.

Selon la variante avantageuse représentée aux figures, le premier polariseur 14 et le deuxième polariseur 16 forment un affichage 'flottant' dans la pièce d'horlogerie auquel le dispositif d'affichage est destiné, le premier polariseur et le deuxième polariseur ayant de mêmes dimensions et étant entièrement superposés l'un avec l'autre à l'intérieur de la zone utile.

Concernant l'étape A), dans une variante du mode de mise en oeuvre décrit où les cibles peuvent être vues, au moins sous une lumière donnée, depuis l'extérieur des deux côtés dudit ensemble de base, il est possible de prévoir des cibles que sur la première plaque 4 ou sur la deuxième plaque 6 pour le dépôt du premier polariseur 14 et du deuxième polariseur 16. Dans le mode de mise en oeuvre général où seul le premier polariseur recouvre seulement partiellement la zone utile 12, les cibles sont de préférence déposées sur la surface intérieure de la première plaque.

Dans une variante préférée, la cellule à cristaux liquides comprend des électrodes (ensembles d'électrodes 28 et 29) qui sont transparentes dans le domaine visible et formées d'un matériau conducteur permettant de voir au moins le contour de celles-ci sous ladite lumière donnée, les cibles 30 étant réalisées avec ledit matériau conducteur sur la première plaque et/ou la deuxième plaque simultanément à la structuration des électrodes transparentes. Ainsi, les cibles 30 peuvent être positionnées très précisément relativement à l'ensemble d'électrodes sur la surface intérieure de la plaque transparente concernée. En particulier, le matériau conducteur est un oxyde d'indium-étain (ITO, de l'anglais Indium Tin Oxide), lequel est un mélange d'oxyde d'indium In2O3 et d'oxyde d'étain SnO2.

Dans une variante préférée, les cibles 30 sont agencées hors de la zone utile 12. Cette variante est même souhaitée lorsque les cibles sont imprimées avec une encre visible pour un utilisateur.

En général, le cordon de colle 8, reliant les première et deuxième plaques transparentes, n'est pas suffisamment transparent pour permettre de voir une cible au travers de ce cordon de colle. Ainsi, lorsqu'une cible est entièrement superposée au cordon de colle, cette cible est généralement utile seulement pour le dépôt d'un polariseur sur la plaque transparente sur laquelle cette cible est imprimée. De même, lorsqu'une cible est en majeure partie superposée au cordon de colle, avantageusement cette cible n'est utilisée que pour le dépôt d'un polariseur sur la plaque transparente sur laquelle cette cible est imprimée. De préférence, chaque cible réalisée en ITO présente au moins une partie non superposée au cordon de colle, car il est relativement difficile de discerner la cible sous ladite lumière donnée avec la colle comme fond. De plus, ladite partie non superposée au cordon de colle est de préférence située du côté extérieur au cordon de colle. En effet, les cristaux liquides comme fond derrière la cible en ITO attenue sa visibilité sous ladite lumière donnée (notamment une lumière bleue). Il donc avantageux qu'au moins une partie de la cible soit située à l'extérieur du cordon de colle 8, en projection dans le plan général 22 de l'ensemble de base 32 (qui est aussi le plan général de la cellule LCD 2).

## Revendications

1. Procédé de fabrication d'un dispositif d'affichage à cristaux liquides comprenant une cellule à cristaux liquides (2) formée d'une première plaque (4) et d'une deuxième plaque (6), qui sont transparentes, et d'un cordon de colle (8) reliant les première et deuxième plaques et définissant avec celles-ci un logement clos contenant des cristaux liquides (10), la cellule à cristaux liquides définissant à l'intérieur du cordon de colle une zone utile (12), qui est destinée à définir la zone visible de cette cellule dans une pièce d'horlogerie auquel le dispositif d'affichage est destiné, et comprenant dans cette zone utile au moins un premier polariseur (14) et un deuxième polariseur (16) qui sont agencés au moins en partie l'un en face de l'autre, respectivement sur la surface extérieure (5) de la première plaque et sur la surface extérieure (7) de la deuxième plaque, de manière qu'au moins le premier polariseur recouvre seulement partiellement ladite zone utile ; le procédé de fabrication comprenant les étapes suivantes :
A) réalisation de cibles (30a à 30d) sur la première plaque et/ou sur la deuxième plaque ;
B) Formation d'un ensemble de base (32) comprenant la première plaque, la deuxième plaque, le cordon de colle définissant ledit logement clos et des cristaux liquides remplissant ce logement clos, la réalisation desdites cibles et la formation de l'ensemble de base étant effectués de manière qu'au moins deux desdites cibles, distantes en projection orthogonale dans un plan général de cet ensemble de base, soient visibles, au moins sous une lumière donnée, du côté de la surface extérieure (5) de la première plaque ;
C) formation d'un ensemble initial (36) comprenant un film polariseur (38), un film adhésif (40) déposé sur une face intérieure du film polariseur, et un support (42) qui supporte le film polariseur et le film adhésif, une partie du film polariseur étant destinée à constituer le premier polariseur (14) et étant recouverte par une première partie (18) du film adhésif ;
D) découpe borgne de l'ensemble initial (36), depuis le côté opposé au support, de manière à traverser le film polariseur et le film adhésif, en définissant le pourtour d'une partie utile (50), située sur le support (42) et comprenant le premier polariseur et la première partie du film adhésif, et d'au moins une partie de travail (46a à 46d) située sur le support, mais sans traverser ce support ; et découpe d'au moins deux marques d'alignement (48a à 48d) au moins au travers de ladite au moins une partie de travail, de manière que lesdites au moins deux marques d'alignement présentent entre elles des positions relatives qui sont identiques aux positions relatives desdites au moins deux cibles, le support (42) étant agencé de manière à pouvoir maintenir un positionnement relatif initial entre ladite partie utile (50) et ladite au moins une partie de travail dès cette étape de découpe ; le support étant transparent, au moins sous ladite lumière donnée, ou ouvert dans au moins deux zones superposées respectivement auxdites aux moins deux marques d'alignement lorsque ce support est situé, dans l'ensemble initial, du côté opposé au film adhésif relativement au film polariseur ;
E) Enlèvement dans l'ensemble initial (36), après l'étape de découpe D), d'une partie résiduelle (52), située sur le support, qui est complémentaire à ladite partie utile (50) et à ladite au moins une partie de travail (46a à 46d), tout en laissant en place sur le support ladite partie utile et ladite au moins une partie de travail, de manière à obtenir, dans le cas où le support est situé du côté opposé au film polariseur relativement au film adhésif, un ensemble intermédiaire (56) ou, dans l'autre cas, un premier ensemble final ;
F) Dans le cas où l'étape E) fournit ledit ensemble intermédiaire (56), apport d'un support additionnel (62), du côté du premier polariseur (14) qui est opposé à ladite première partie (18) du film adhésif ; et transfert du premier polariseur avec ladite première partie du film adhésif et de ladite au moins une partie de travail depuis le support sur le support additionnel pour former un deuxième ensemble final (66), le support additionnel étant transparent, au moins sous la lumière donnée, ou ouvert dans au moins deux zones superposées respectivement auxdites aux moins deux marques d'alignement, le support additionnel étant agencé pour pouvoir maintenir ledit positionnement relatif initial entre le premier polariseur et ladite au moins une partie de travail ;
ces étapes étant suivies par les étapes successives suivantes :
G) Apport, selon le cas, du premier ensemble final ou du deuxième ensemble final (66) au-dessus de l'ensemble de base (32) du côté de la première plaque (4) avec le support, respectivement le support additionnel (62) situé du côté opposé à la première plaque relativement à ladite au moins partie de travail et ladite première partie du film adhésif située directement en face de la première plaque ; et positionnement précis, selon le cas, du premier ensemble final ou deuxième ensemble final (66) relativement à la première plaque par un alignement précis desdites au moins deux cibles (30a à 30d) avec respectivement lesdites au moins deux marques d'alignement (48a à 48d), au moyen d'un dispositif optique (76) qui est agencé pour permettre de voir, au moins sous ladite lumière donnée et selon une direction orthogonale audit plan général (22) de la cellule à cristaux liquides, lesdites au moins deux cibles au travers desdites au moins deux marques d'alignement (48a à 48d), lesquelles sont agencées de manière que lesdites au moins deux cibles (30a à 30d) peuvent être précisément alignées, selon ladite direction orthogonale, avec respectivement ces au moins deux marques d'alignement ;
H) déplacement, selon la direction orthogonale audit plan général, du premier ensemble final, respectivement du deuxième ensemble final (66) vers la première plaque (4) ; collage du premier polariseur (14) sur cette première plaque au moyen de ladite première partie (18) du film adhésif ; et retrait du support, respectivement du support additionnel (62).

2. Procédé de fabrication selon la revendication 1, **caractérisé en ce que** la cellule à cristaux liquides (2) comprend des électrodes (28, 29) qui sont transparentes dans le domaine visible et formées d'un matériau permettant de voir au moins le contour de celles-ci sous ladite lumière donnée, lesdites cibles (30a à 30d) étant réalisées avec ledit matériau et formées sur la première plaque et/ou la deuxième plaque simultanément à la réalisation des électrodes transparentes.

3. Procédé de fabrication selon la revendication 1 ou 2, **caractérisé en ce que** lesdites cibles sont agencées hors de ladite zone utile (12).

4. Procédé de fabrication selon une quelconque des revendications précédentes, **caractérisé en ce que** ladite au moins une partie de travail (46a à 46d) est recouverte respectivement d'au moins une partie correspondante du film adhésif (40) et est collée sur la première plaque simultanément au premier polariseur.

5. Procédé de fabrication selon la revendication 4, **caractérisé en ce que** ladite au moins une partie de travail (46a à 46d) est prévue hors de ladite zone utile (12) et est laissée sur la première plaque dans la cellule à cristaux liquides.

6. Procédé de fabrication selon la revendication 4, **caractérisé en ce que** ladite au moins une partie de travail (46a à 46d) est enlevée suite à ladite étape H).

7. Procédé de fabrication selon une quelconque des revendications précédentes, dans lequel ledit ensemble initial est un premier ensemble initial et le deuxième polariseur (16) recouvre seulement partiellement ladite zone utile (12) ; **caractérisé en ce que** ce procédé comprend une formation d'un deuxième ensemble initial, semblable au premier ensemble initial, comprenant un deuxième film polariseur, un deuxième film adhésif déposé sur une face intérieure du deuxième film polariseur, et un deuxième support supportant le deuxième film polariseur et le deuxième film adhésif, une partie du deuxième film polariseur étant destinée à constituer le deuxième polariseur et étant recouverte par une partie du deuxième film adhésif ; **en ce que** ladite réalisation desdites cibles et ladite formation dudit ensemble de base (32) sont effectués de manière qu'au moins deux desdites cibles, distantes en projection orthogonale dans ledit plan général, soient visibles, au moins sous la lumière donnée, du côté de la surface extérieure (7) de la deuxième plaque (6) ; et **en ce que** les étapes D) à H) sont répétées avec le deuxième ensemble initial.

8. Procédé de fabrication selon la revendication 7, **caractérisé en ce que** le premier polariseur (14) présente, au moins dans une partie de ladite zone utile, un premier contour qui est identique au deuxième contour du deuxième polariseur (16), le premier contour et le deuxième contour étant précisément alignés selon ladite direction orthogonale dans la cellule à cristaux liquides (2).

9. Procédé de fabrication selon la revendication 8, **caractérisé en ce que** le premier polariseur (14) et le deuxième polariseur (16) sont entièrement situés à l'intérieur de ladite zone utile (12).

10. Procédé de fabrication selon la revendication 9, **caractérisé en ce que** le premier polariseur (14) et le deuxième polariseur (16) sont situés entièrement à l'intérieur de la zone utile (12) et forment une zone d'affichage 'flottante' dans la pièce d'horlogerie auquel le dispositif d'affichage est destiné, le premier polariseur et le deuxième polariseur ayant de mêmes dimensions et étant entièrement superposés l'un avec l'autre.
